# EUROPÄISCHE PATENTSCHRIFT

(11) **EP 3 047 249 B1**
(45) Veröffentlichungstag und Bekanntmachung des Hinweises auf die Patenterteilung: **29.05.2019**
(21) Anmeldenummer: 14752295.7
(22) Anmeldetag: 11.08.2014
(51) Int. Cl.: G01L 19/04, G01L 27/00

(54) **DRUCKMESSUMFORMER**
PRESSURE TRANSDUCER
CONVERTISSEUR DE MESURE DE PRESSION

(30) Priorität: 19.09.2013 DE 102013110368
(43) Veröffentlichungstag der Anmeldung: 27.07.2016
(73) Patentinhaber: Endress+Hauser SE+Co. KG, 79689 Maulburg (DE)
(72) Erfinder: WOSNITZA, Elmar, 79112 Freiburg (DE); PARROTTO, Davide, 79576 Weil am Rhein (DE); KARWECK, Lars, 79589 Binzen (DE); BUDER, Ulrich, 12107 Berlin (DE); TEXTOR, Olaf, 79540 Lörrach (DE)
(74) Vertreter: Andres, Angelika Maria
(86) Internationale Anmeldenummer: PCT/EP2014/067180
(87) Internationale Veröffentlichungsnummer: WO 2015/039810

(56) Entgegenhaltungen:
- WO-A1-96/17236
- GB-A- 2 263 975
- US-A- 5 764 541
- "Pressure sensors C27 series", , 3. August 2009 (2009-08-03), XP055148099, Gefunden im Internet: URL:http://web.archive.org/web/20101206041 813/http://www.epcos.com/inf/57/ds/c27_gau ge.pdf [gefunden am 2014-10-21]

## Beschreibung

Die vorliegende Erfindung betrifft einen Druckmessumformer mit einem resistiven Drucksensorelement, insbesondere einem piezoresistiven Drucksensorelement.

Aus dem Stand der Technik ist ein Datenblatt der Firma Epcos bekannt geworden. Das Datenblatt "Pressure sensors C27 series"mit Datum vom 03. August 2009, welches unter http://web.archive.org/web/20101206041813/http://www.epcos.com/inf/57/ds/c27 _gauge.pdf am 21.10.2014 abrufbar war, offenbart ein Temperatursensorelement, welches mit einer Versorgungsspannung zu betreiben ist und für welches ein Sensitivitätsfaktor und dessen Temperaturkoeffizienten ermittelt werden.

Der erfindungsgemäße Druckmessumformer gemäß Anspruch 1 umfasst ein resistives Drucksensorelement mit einer Messmembran, welche mindestens vier Widerstandselemente aufweist, wobei die Widerstandselemente in einer Vollbrückenschaltung angeordnet sind, wobei die Vollbrücke eine Längsrichtung aufweist, in der sie in einem Messbetrieb mit einem konstanten Strom gespiesen wird, wobei bei einer Speisung mit dem konstanten Strom eine Längsspannung eine erste Druckabhängigkeit und eine erste Temperaturabhängigkeit aufweist, und eine Diagonalspannung eine zweite Druckabhängigkeit und eine zweite Temperaturabhängigkeit aufweist, wobei die zweite Druckabhängigkeit bei einer gegebenen Temperatur größer ist als die erste Druckabhängigkeit, wobei der Druckmessumformer eine Verarbeitungsschaltung aufweist, die dazu eingerichtet ist, zumindest anhand der Diagonalspannung einen Druckmesswert zu bestimmen, wobei die Verarbeitungsschaltung weiterhin dazu eingerichtet ist, im Messbetrieb zu überprüfen, ob ein Wertepaar von einer Längsspannung und einer Diagonalspannung bei einer aktuellen Temperatur einem erwarteten funktionalen Zusammenhang entsprich, wobei die Verarbeitungsschaltung dazu eingerichtet ist, anhand eines Ergebnisses der Überprüfung, ob ein Wertepaar von einer Längsspannung und einer Diagonalspannung bei einer aktuellen Temperatur einem erwarteten funktionalen Zusammenhang entspricht, eine Qualitätsaussage über den Druckmesswert zu treffen.

In einer Weiterbildung der Erfindung umfasst der Druckmessumformer weiterhin einen Temperatursensor zum Bereitstellen eines Temperatursignals, welches von einer Temperatur der Messmembran abhängt, wobei das Temperatursignal keine Druckabhängigkeit oder eine kleinere Druckabhängigkeit aufweist als die erste Druckabhängigkeit, wobei die Verarbeitungsschaltung dazu vorgesehen ist, zumindest auch anhand des Temperatursignals des Temperatursensors festzustellen, welches die aktuelle Temperatur der Messmembran ist.

In einer Weiterbildung der Erfindung ist der erwartete funktionale Zusammenhang zwischen Längsspannung und Diagonalspannung bei einer Temperatur, ein zu einem Referenzzeitpunkt abgespeicherter funktionaler Zusammenhang zwischen Längsspannung und Diagonalspannung bei der Temperatur.

Die Erfindung wird nun anhand eines in den Zeichnungen dargestellten Ausführungsbeispiels erläutert. Es zeigt:
- Fig. 1:: eine schematische Darstellung eines Ausführungsbeispiels eines Drucksensorelements eines erfindungsgemäßen Messumformers;
- Fig. 2:: eine schematische Darstellung eines funktionalen Zusammenhangs zwischen einer Diagonalspannung Uₚ und der Längsspannung Uₗ, wobei die Temperatur T als unabhängiger Parameter in den funktionalen Zusammenhang eingeht; und

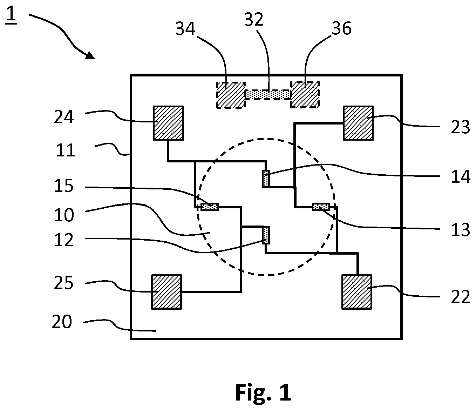

- Fig. 1:: eine schematische Darstellung eines Ausführungsbeispiels eines Signalpfads eines erfindungsgemäßen Messumformers

Das in Fig1. dargestellte Drucksensorelement 1, umfasst eine Messmembran 10, die beispielsweise durch Ätzprozesse in einem Siliziumkörper 11 präpariert ist. Die Messmembran 10 weist vier piezo-resistive Widerstandselemente 12, 13, 14, 15 auf, die zu einer Wheatstoneschen Brücke geschaltet sind, wobei im Idealfall ein erstes Widerstandselement 12 und ein drittes Widerstandselement 14 im Wesentlichen eine erste Druckabhängigkeit aufweisen, und ein zweites Widerstandselement 13 und ein viertes Widerstandselement 15 im Wesentlichen eine zweite Druckabhängigkeit aufweisen, die anders ist als die als die erste Druckabhängigkeit und insbesondere ein anderes Vorzeichen aufweist. Zwischen den Widerstandselemente mit gleicher Druckabhängigkeit ist in der Brückenschaltung jeweils ein Widerstandselement anderer Druckabhängigkeit angeordnet. In einem die Messmembran 10 umgebenden Randbereich 20 des Drucksensorelements 1 sind Kontaktflächen 22, 23, 24, 25 angeordnet, welche die Brückenschaltung jeweils zwischen zwei Widerstandselementen kontaktieren. An die Kontaktflächen sind Versorgungs- bzw. Messleitungen angeschlossen. Die Brückenschaltung wird im Messbetrieb mit einem konstanten Strom gespeist, wozu zwischen einer ersten Kontaktfläche 22 und einer dritten Kontaktfläche 24, die diametral zueinander angeordnet sind, eine Längsspannung Uₗ anzulegen ist. Zwischen einer zweiten Kontaktfläche 23 und einer dritten Konkaktfläche 25, die diametral zueinander und diagonal zur ersten und zweiten Kontaktfläche angeordnet sind, kann eine druckabhängige Diagonalspannung abgegriffen werden.

Im Idealfall weisen die Widerstandselemente in der Ruhelage der Messmembran den gleichen Widerstand auf, so dass die Diagonalspannung in der Ruhelage null ist.

Würden die Widerstandselemente unterschiedlicher Druckabhängigkeiten eine strikt antisymmetrische Druckabhängigkeit aufweisen, also R₁(p) - R₁(p=0) = R₃(p) - R₃(p=0) = R₂(p=0) - R₂(p) = R₄(p=0) - R₄(p), so wäre die Längsspannung Uₗ unabhängig vom Druck p. Da dies aber kaum realisierbar ist, weist auch die Längsspannung eine Druckabhängigkeit auf. Die Längsspannung und die Diagonalspannung weisen zudem erhebliche Temperaturabhängigkeiten auf, wobei die Temperaturabhängigkeit der Längsspannung größer ist als deren Druckabhängigkeit. In erster Näherung kann die Temperaturabhängigkeit der Diagonalspannung, in Abhängigkeit der Längsspannung kompensiert werden.

Ein Drucksensorelement weist demnach Übertragungsfunktionen für die Längsspannung Uₗ(p,T) und die Diagonalspannung Uₚ(p,T), als Funktionen des Drucks und der Temperatur auf.

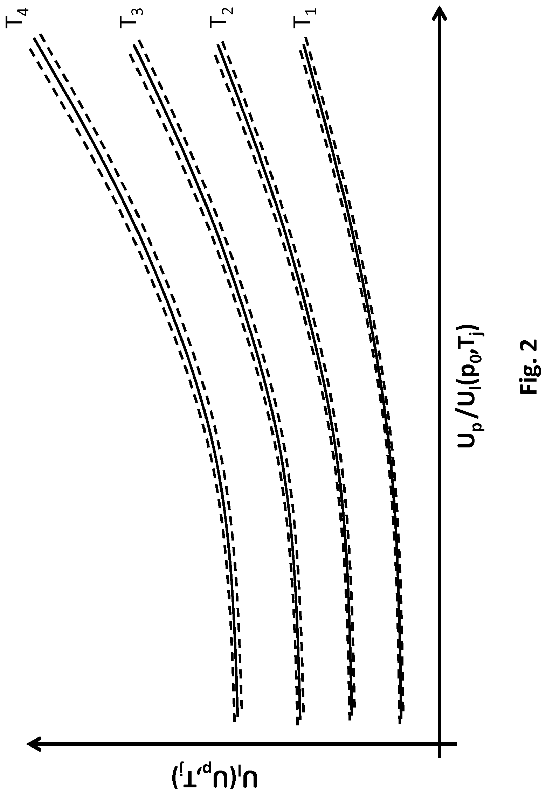

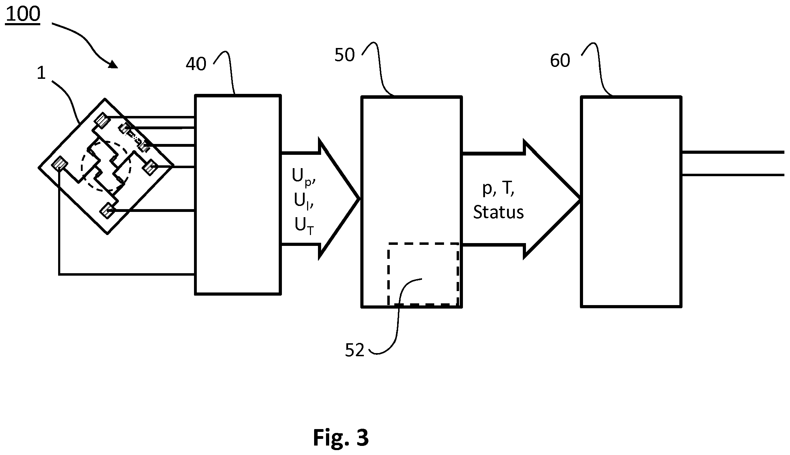

Die vorliegende Erfindung geht nun davon aus, dass bei Kenntnis der Temperatur des Drucksensorelements, anhand der Übertagungsfunktionen überprüft werden kann, ob ein aktuell gemessenes Wertepaar Uₗ(p,T),Uₚ(p,T) plausibel ist, d.h., ob bei einer gegebenen Temperatur eine Längsspannung Uₗ(p,T) einer erwarteten Längsspannung bei der gleichzeitig gemessenen Diagonalspannung Uₚ(p,T) entspricht. Um dies näher zu erläutern wird nun auf Fig. 2 verwiesen.

Fig. 2 zeigt Kurven für die Längsspannung Uₗ(Uₚ, T) einer Wheatstoneschen Brückenschaltung mit vier piezoresistiven Brückenwiderständen als Funktion der druck- und temperaturabhängigen Diagonalspannung Uₚ der Wheatstoneschen Brückenschaltung. Wobei in Fig. 2 im Sinne der Übersichtlichkeit als Abszisse nicht Uₚ sondern Uₚ/Uₗ(p₀,Tⱼ) gewählt ist (j=1, 2, 3, 4). Insofern als die Diagonalspannung in erster Näherung proportional zur Längsspannung ist, wird durch diese Normierung erreicht, dass die normierte Diagonalspannung Uₚ/Uₗ(p₀,Tⱼ) für gleiche Drücke, bei unterschiedlichen Temperaturen Tⱼ etwa den gleichen Wert aufweist, so dass die Kurven für einen Druckbereich bei verschiedenen Temperaturen übereinander zu liegen kommen, und damit besser in einer Zeichnung darstellbar sind. Hierbei ist der Divisor Uₚ/Uₗ(p₀,Tⱼ) ein erwarteter Längsspannungswert bei einer Temperatur Tⱼ und einem Gleichgewichtsdruck p₀, für den gilt U_{d}(p) = 0, wobei Tⱼ die Messbrückentemperatur ist, welche vorzugsweise mit einem zusätzlichen, druckunabhängigen Temperatursensor erfasst ist. Zur Implementierung der Erfindung in einem Feldgerät kann die Normierung Uₚ/Uₗ(p₀,Tⱼ) durchgeführt werden, dies ist aber nicht erforderlich, da auch ohne diese Normierung überprüft werden kann, ob eine aktuell gemessene Längsspannung Uₗ einem Erwartungswert Uₗ(p,T) entspricht.

Daten für Uₗ(p,T) werden bei der Fertigung und Kompensation von erfindungsgemäßen Druckmessumformern für jeden Druckmessumformer über die spezifizierten Wertebereiche von Druck und Temperatur für verschiedene Temperaturen Tⱼ (j=1, 2, ... , N) aufgenommen und in einem Datenspeicher des Messumformers hinterlegt, beispielsweise als eine vollständig polynomiale Darstellung oder als eine Tabelle von Stützstellen U_{l i,j} = Uₗ(Uₚᵢ, Tⱼ) mit Interpolationsalgorithmen für Zwischenwerte von Uₗ(Uₚ, T).

Wie in Fig. 2 durch gestrichelte Linien dargestellt, ist für jede Funktion Uₗ(Uₚ, Tⱼ), jeweils ein Toleranzbereich definiert, in dem im Messbetrieb die tatsächlich gemessenen Werte der Längsspannung Uₗ bei gleichzeitig gemessenen Werten für die Diagonalspannung Uₚ und die Temperatur T liegen sollten.

Wenn dies nicht der Fall ist, ist dies ein Indiz dafür, dass sich eine der Übertragungsfunktionen verändert hat, so dass die Qualität der Druckmesswerte p(Uₚ, Uₗ) nicht mehr gewährleistet ist. Der Messumformer ist dazu eingerichtet, dies zu signalisieren.

Wesentlich für die beschriebene Überwachung des Drucksensorelements 1 ist natürlich eine genaue Kenntnis der Temperatur des Drucksensorelements 1. Hierzu weist das Drucksensorelement 1, wie in Fig. 1 dargestellt, in seinem Randbereich 20 benachbart zur Messmembran ein fünftes Widerstandselement 32 auf, dessen Widerstandswert vorzugsweise ausschließlich von der Temperatur abhängt, jedenfalls eine erheblich geringere Druckabhängigkeit aufweist als der Längswiderstand der Brückenschaltung. Das fünfte Widerstandselement ist über fünfte und sechste Kontaktflächen 34, 36 kontaktierbar.

Wie in Fig, 3 dargestellt umfasst das Ausführungsbeispiel eines erfindungsgemäßen Druckmessumformers 100 ein Drucksensorelement 1, wie es im Zusammenhang mit Fig. 1 diskutiert wurde.

Der Druckmessumformer 100 umfasst weiterhin ein ASIC 40 welches analoge Ausgänge zum Speisen der Brückenschaltung und des im Wesentlichen druckunabhängigen Widerstandselements des Drucksensorelements 1 aufweist. Das Speisen erfolgt jeweils mit einem konstanten Strom. Weiterhin weist der ASIC einen analogen Eingang zum Erfassen der Diagonalspannung der Brückenschaltung auf.

Der ASIC 40 umfasst weiterhin einen digitalen Ausgang, an dem Wertetripel der Diagonalspannung Uₚ, der Längsspannung Uₗ, und der Spannung über dem im Wesentlichen druckunabhängigen Widerstandselement U_{T} ausgegeben werden.

Der Druckmessumformer 100 umfasst weiterhin einen Signalprozessor 50 mit einem Datenspeicher 52, in welchem einerseits Kompensationskoeffizienten zum ermitteln des Drucks und der Temperatur und andererseits die funktionale Abhängigkeit der Längsspannung Uₗ(Uₚ, T) von der Diagonalspannung Uₚ und der Temperatur bzw. die funktionale Abhängigkeit der Längsspannung Uₗ(Uₚ, U_{T}) von der Diagonalspannung Uₚ und der Spannung über dem im Wesentlichen druckunabhängigen Widerstandselement U_{T} hinterlegt sind.

Auf Basis des von dem ASIC bereitgestellten Wertetripel und der gespeicherten Information ermittelt der Signalprozessor Werte für den Druck p und die Temperatur T. Weiterhin überprüft er, ob die Längsspannung einem nach den hinterlegten Daten erwarteten Wert Uₗ(Uₚ, T) bzw. Uₗ(Uₚ, U_{T}) entspricht. Der Signalprozessor gibt ein Wertetripel aus, welches einen Druckmesswert einen Temperaturmesswert und eine Statusausinformation über den Druckmesswert enthält, also ob die Längsspannung Uₗ(Uₚ, T) bzw. Uₗ(Uₚ, U_{T}) der Erwartung entspricht.

Der Druckmessumformer 100 umfasst weiterhin einen Hauptprozessor 60 welcher die vom Signalprozessor ermittelten Werte empfängt, und zur Kommunikation an ein Leitsystem aufbereitet.

## Patentansprüche

1. Druckmessumformer, umfassend:
ein resistives Drucksensorelement (1) mit einer Messmembran (10), welche mindestens vier Widerstandselemente aufweist,
wobei die Widerstandselemente (12, 13, 14, 15) in einer Vollbrückenschaltung angeordnet sind,
wobei die Vollbrücke eine Längsrichtung aufweist, in der sie in einem Messbetrieb mit einem konstanten Strom gespiesen wird,
wobei bei einer Speisung mit dem konstanten Strom eine Längsspannung eine erste Druckabhängigkeit und eine erste Temperaturabhängigkeit aufweist, und eine Diagonalspannung eine zweite Druckabhängigkeit und eine zweite Temperaturabhängigkeit aufweist,
wobei die zweite Druckabhängigkeit bei einer gegebenen Temperatur größer ist als die erste Druckabhängigkeit,
wobei der Druckmessumformer eine Verarbeitungsschaltung aufweist, die dazu eingerichtet ist, zumindest anhand der Diagonalspannung und ggf. der Längsspannung einen Druckmesswert zu bestimmen
**dadurch gekennzeichnet, dass** die Verarbeitungsschaltung weiterhin dazu eingerichtet ist, im Messbetrieb zu überprüfen, ob ein Wertepaar von einer Längsspannung und einer Diagonalspannung bei einer aktuellen Temperatur einem erwarteten funktionalen Zusammenhang entspricht, wobei die Verarbeitungsschaltung dazu eingerichtet ist, anhand eines Ergebnisses der Überprüfung, ob ein Wertepaar von einer Längsspannung und einer Diagonalspannung bei einer aktuellen Temperatur einem erwarteten funktionalen Zusammenhang entspricht, eine Qualitätsaussage über den Druckmesswert zu treffen.

2. Druckmessumformer nach Anspruch 1, weiterhin umfassend:
einen Temperatursensor (32) zum Bereitstellen eines Temperatursignals, welches von einer Temperatur der Messmembran abhängt, wobei das Temperatursignal keine Druckabhängigkeit oder eine kleinere Druckabhängigkeit aufweist als die erste Druckabhängigkeit,
wobei die Verarbeitungsschaltung dazu vorgesehen ist, zumindest auch anhand des Temperatursignals des Temperatursensors festzustellen, welches die aktuelle Temperatur der Messmembran ist.

3. Druckmessumformer nach einem der vorhergehenden Ansprüche,
wobei der erwartete funktionale Zusammenhang zwischen Längsspannung und Diagonalspannung bei einer Temperatur, ein zu einem Referenzzeitpunkt abgespeicherter funktionaler Zusammenhang zwischen Längsspannung und Diagonalspannung bei der Temperatur ist.

## Claims

1. Pressure transmitter, comprising:
a resistive pressure sensor element (1) with a measuring diaphragm (10),
said diaphragm having at least four resistance elements,
wherein the resistance elements (12, 13, 14, 15) are arranged in a full bridge circuit,
wherein the full bridge has a longitudinal direction in which it is supplied with a constant current in a measuring mode,
wherein, in the event of being supplied with a constant current, a longitudinal voltage has a first pressure dependency and a first temperature dependency, and a diagonal voltage has a second pressure dependency and a second temperature dependency,
wherein the second pressure dependency is greater than the first pressure dependency at a given temperature,
wherein the pressure transmitter has a processing circuit, which is configured to determine a pressure measured value at least using the diagonal voltage and, where applicable, the longitudinal voltage,
**characterized in that**
the processing circuit is further configured to check, during measuring operation, whether a value pair of a longitudinal voltage and a diagonal voltage corresponds to an expected functional correlation at a current temperature,
wherein the processing circuit is configured to make a quality assessment of the pressure measured value using a result of the check to determine whether a value pair of a longitudinal voltage and a diagonal voltage corresponds to an expected functional correlation at a current temperature.

2. Pressure transmitter as claimed in Claim 1, further comprising:
a temperature sensor (32) designed to provide a temperature signal that depends on a temperature of the measuring diaphragm, wherein the temperature signal has no pressure dependency or a smaller pressure dependency than the first pressure dependency,
wherein the processing circuit is designed to determine which signal is the current temperature of the measuring diaphragm at least also using the temperature signal of the temperature sensor.

3. Pressure transmitter as claimed in one of the previous claims,
wherein the expected functional correlation between the longitudinal voltage and the diagonal voltage at a temperature is a functional correlation between the longitudinal voltage and the diagonal voltage at the temperature that is saved at a reference time.

## Revendications

1. Transmetteur de pression, comprenant :
un élément capteur de pression résistif (1) avec une membrane de mesure (10), laquelle membrane comprend au moins quatre éléments de résistance,
les éléments de résistance (12, 13, 14, 15) étant disposés dans un circuit en pont intégral,
le pont intégral présentant une direction longitudinale, dans laquelle il est alimenté, en mode de mesure, avec un courant constant,
transmetteur pour lequel, en cas d'alimentation avec le courant constant, une tension longitudinale présente une premier dépendance de la pression et une première dépendance de la température, et une tension diagonale présente une deuxième dépendance de la pression et une deuxième dépendance de la température,
la deuxième dépendance de la pression étant supérieure à la première dépendance de la pression à une température donnée,
le transmetteur de pression comportant un circuit de traitement, lequel circuit est configuré de telle sorte à déterminer une valeur mesurée de pression, au moins au moyen de la tension diagonale et éventuellement au moyen de la tension longitudinale,
**caractérisé**
**en ce que** le circuit de traitement est en outre configuré de telle sorte à contrôler, en mode de mesure, si un couple de valeurs composé d'une tension longitudinale et d'une tension diagonale correspond, à une température actuelle, à une relation fonctionnelle attendue,
le circuit de traitement étant configuré de telle sorte à effectuer, au moyen d'un résultat du contrôle - à savoir si un couple de valeurs composé d'une tension longitudinale et d'une tension diagonale correspond, à une température actuelle, à une relation fonctionnelle attendue - une évaluation de la qualité de la valeur mesurée de pression.

2. Transmetteur de pression selon la revendication 1, comprenant en outre :
un capteur de température (32) destiné à mettre à disposition un signal de température, lequel signal dépend d'une température de la membrane de mesure, le signal de température ne présentant pas de dépendance de la pression, ni une dépendance de la pression inférieure à la première dépendance de pression,
le circuit de traitement étant destiné à déterminer, au moins également au moyen du signal de température du capteur de température, la température actuelle de la membrane de mesure.

3. Transmetteur de pression selon l'une des revendications précédentes,
pour lequel la relation fonctionnelle attendue entre la tension longitudinale et la tension diagonale, à une température donnée, est une relation fonctionnelle, enregistrée à un instant de référence, entre la tension longitudinale et la tension diagonale à la température donnée.
